# FASCICULE DE BREVET EUROPEEN

(11) **EP 0 254 630 B1**
(45) Date de publication et mention de la délivrance du brevet: **26.01.1994**
(21) Numéro de dépôt: 87401643.9
(22) Date de dépôt: 10.07.1987
(51) Int. Cl.: F16L 37/00

(54) **Connecteur à déverrouillage rapide sous charge**
Verbindungsvorrichtung zur schnellen Demontage unter Last
Connecting device for quick release under load

(30) Priorité: 16.07.1986 FR 8610352
(43) Date de publication de la demande: 27.01.1988
(73) Titulaire: COFLEXIP Société Anonyme, 75116 Paris (FR)
(72) Inventeur: Maloberti, René, F-94130 Nogent (FR)
(74) Mandataire: Geismar, Thierry

(56) Documents cités:
- EP-A- 0 080 136
- DE-A- 2 333 040
- DE-B- 1 184 157
- FR-A- 1 332 745
- US-A- 2 705 652
- US-A- 2 748 647
- US-A- 3 659 877
- US-A- 3 926 090
- US-A- 4 082 468
- US-A- 4 159 132

## Description

La présente invention est relative à un connecteur de sécurité à déverrouillage rapide sous charge de conduites tubulaires de transport de produits dangereux pour l'environnement, en particulier des hydrocarbures.

Le connecteur selon l'invention est utilisable dans toutes les applications où il est nécessaire de pouvoir séparer de manière quasi instantanée des conduites connectées sous charge élevée, en particulier des conduites tubulaires de transfert d'hydrocarbures maintenues en tension.

Un tel connecteur est en particulier utilisable dans le dispositif décrit dans le brevet français 2370218 de la société déposante pour relier deux structures à l'aide d'une conduite tubulaire flexible maintenue en tension assurant à la fois la liaison entre les structures et le transfert du fluide entre elles.

On connaît d'après US-A-3 659 877, un connecteur pour conduites tubulaires comportant entre deux brides en regard une pluralité de dispositifs de liaison constitués chacun d'une tige filetée munie d'une section réduite destinée à former une zone de rupture, les tiges filetées étant chacune maintenue par des écrous sur les brides correspondantes.

Du fait de la réduction de section de chacune des tiges filetées, la charge admissible du connecteur réalisé est réduite et la déconnexion lors d'une surcharge n'est absolument pas fiable dans la mesure où il n'est pas possible de garantir un sectionnement simultané de toutes les tiges assurant la liaison.

La présente invention a pour objet de réaliser un connecteur à déverrouillage rapide permettant de réaliser de manière particulièrement fiable une déconnexion rapide entre deux conduites même lorsqu'une charge très élevée est appliquée sur les dispositifs de liaison, cette charge selon l'invention pouvant être voisine de la charge de rupture des éléments constitutifs des dispositifs de liaison, c'est-à-dire dans la pratique de l'ordre de plusieurs dizaines de tonnes.

Un connecteur à déverrouillage rapide sous charge selon un premier mode de mise en oeuvre de l'invention est défini dans la revendication 1.

Les profilages réalisés sur la tige et la bague sont de préférence des filetages, la bague étant alors un écrou dans lequel la tige filetée est vissée intérieurement, le cas échéant après que le manchon ait été engagé sur la bague.

En variante, les profilages peuvent être constitués de dentelures, auquel cas les segments constitutifs de la bague sont engagés sur la tige puis maintenus en place grâce au manchon.

On comprend que, selon l'invention, lorsque l'on exerce un effort axial dans un sens visant à écarter le manchon de la tige sur laquelle est engagée la bague, le manchon coulisse sur la périphérie de la bague jusqu'à ce que son extrémité arrive au voisinage de l'extrémité de la bague provoquant alors une séparation des segments composant cette dernière.

De préférence le manchon annulaire est fretté à chaud sur la bague.

En variante, il est possible de prévoir un léger jeu de montage. La surface de contact entre la bague et le manchon est de préférence cylindrique mais en variante peut être légèrement conique dans le sens opposé à celui qui provoquerait l'autofrettage du manchon sur la bague du fait du serrage de la bague sur la tige.

Dans un mode de réalisation particulier, la bague est constituée de trois segments annulaires égaux. Dans une forme de réalisation particulière utilisant une tige filetée et un écrou et destinée à être mise en oeuvre dans le cas où l'on cherche, lors de la mise en place, à réaliser un serrage entre l'écrou et la tige filetée par rotation du manchon engagé sur l'écrou, il est prévu sur la paroi intérieure du manchon et la paroi extérieure de l'un au moins des segments de l'écrou, au moins une rainure de section semi-circulaire, un pion cylindrique étant logé dans les rainures en regard pour assurer la transmission d'un couple de serrage. Ce couple de serrage peut par exemple être appliqué à l'aide d'un outil s'engageant sur une partie du manchon agencée par exemple en six pans.

Le dispositif selon l'invention peut en outre comporter une seconde tige profilée, filetée ou dentelée, engagée dans la bague et solidaire de la conduite dont est solidarisé le manchon. On a ainsi deux tiges profilées en regard engagées dans la bague et solidaires chacune d'une des conduites.

Dans une forme avantageuse de réalisation, en vue notamment de réduire la course du manchon avant séparation des segments de la bague, celle-ci présente une surface extérieure étagée comportant au moins un décrochement, le manchon présentant une surface interne correspondante. Grâce à cette forme de réalisation, la séparation des segments de la bague est obtenue dès que le manchon a parcouru une longueur correspondant à une partie seulement de la longueur de la bague, à savoir la distance séparant l'extrémité de plus grand diamètre de la bague de la zone du décrochement.

Dans un mode de réalisation particulier de l'invention la tige profilée de chaque dispositif de liaison est solidarisée d'une bride annulaire d'une des conduites, le manchon étant solidarisé de préférence d'une plaque annulaire mobile dont le déplacement sous l'effet de l'organe d'actionnement tel qu'un vérin provoque, comme indiqué ci-dessus, le déplacement nécessaire des manchons engagés sur les bagues à segments correspondantes et la déconnexion voulue.

D'autres modes de mise en oeuvre du connecteur selon l'invention, sont définis dans les revendications 10 et 11.

Dans le but de mieux faire comprendre l'invention, on va maintenant en décrire à titre d'exemples nullement limitatifs des modes de réalisation particuliers en se référant au dessin annexé dans lequel :
- la figure 1 représente schématiquement un connecteur de conduites tubulaires selon un premier mode de réalisation de l'invention,
- la figure 2 est une vue en coupe schématique d'un dispositif de liaison d'un type utilisable dans le connecteur de la figure 1, en position montée,
- la figure 3 est une vue en coupe selon III-III de la figure 2,
- les figures 4 et 5 sont des vues analogues à la figure 2, montrant le dispositif de liaison au cours de deux phases de séparation,
- la figure 6 est une vue dans le sens de la flèche VI de la figure 5 illustrant la séparation des segments de l'écrou,
- la figure 7 illustre un connecteur de conduites tubulaires selon un second mode de réalisation.
- la figure 8 illustre une variante de ce connecteur,
- les figures 9 et 10 sont des vues respectivement en coupe transversale et en élévation d'un autre mode de réalisation de connecteur selon l'invention,
- la figure 10 illustre encore un autre mode de réalisation de connecteur de conduites tubulaires.

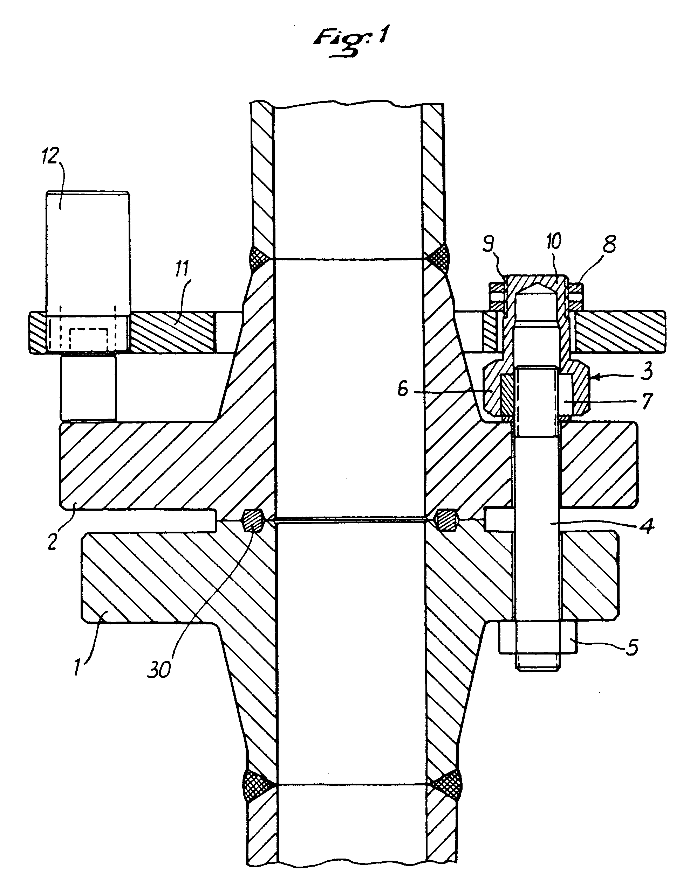

On a illustré sur la figure 1, un connecteur de conduites tubulaires telles que celles utilisées pour le transport d'hydrocarbures et d'axe vertical dans l'exemple illustré.

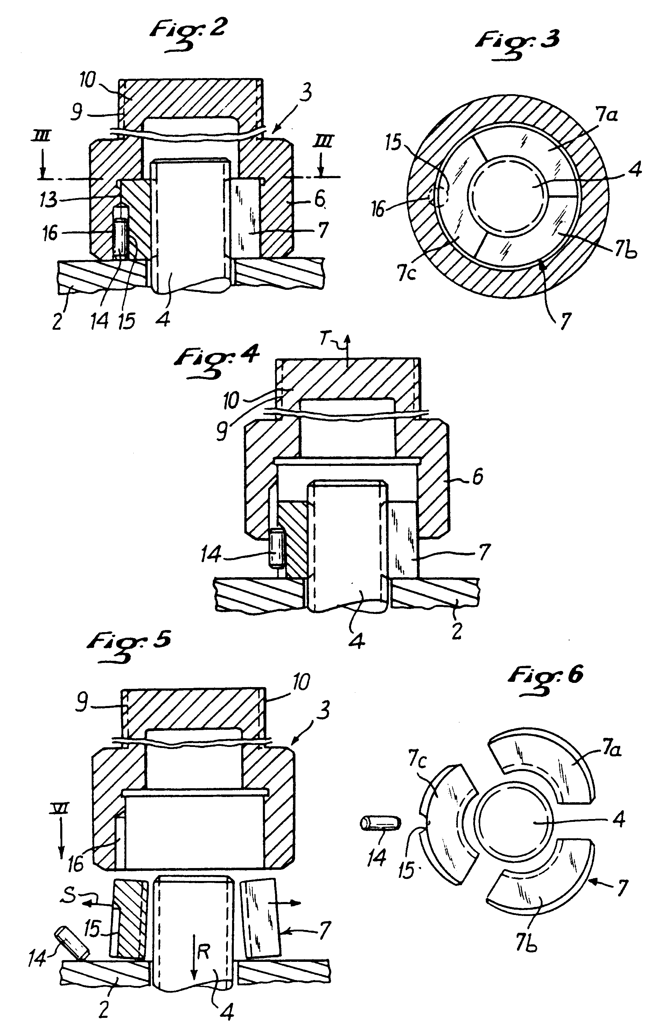

Le connecteur comporte deux brides annulaires 1 et 2 entre lesquelles doit pouvoir être réalisée une déconnexion rapide sous charge, une pluralité de dispositifs de liaison 3 décrits plus en détail en référence aux figures 2 à 6 étant répartie sur lesdites brides 1 et 2. Chaque dispositif de liaison comprend une tige profilée 4, filetée dans l'exemple illustré, qui traverse la bride 1 de l'élément de connecteur supérieur et est fixée par un écrou correspondant 5 à la bride de l'autre élément de connecteur. La connexion est assurée par serrage d'un manchon 6 engagé autour d'une bague taraudée formant écrou 7 de chaque dispositif de liaison contre la bride 2. Un écrou 8 vissé sur un filetage 9 de l'extrémité libre 10 du manchon 6 solidarise la manchon d'une plaque annulaire 11 montée coaxialement autour de l'élément supérieur de connecteur. Un vérin de poussée 12 est prévu pour soulever la plaque 11 en prenant appui sur la bride 2. Avantageusement plusieurs vérins pourraient être prévus.

On comprend qu'un actionnement du vérin 12 provoque un écartement entre la bride 2 et la plaque 11 et donc le déplacement des manchons 6 des différents dispositifs de liaison comme illustré aux figures 2 à 6.

On a illustré sur ces figures le principe de fonctionnement d'un dispositif de liaison utilisable dans le connecteur selon l'invention.

De tels dispositifs de liaison sont dans leur principe connus. Une application à la déconnexion d'une structure de recouvrement dans une plateforme de forage offshore est par exemple décrite dans le brevet US-A-4,082,468. Il s'agit dans ce document de pouvoir réaliser une déconnexion facile par plongeurs mais non comme dans la présente invention une déconnexion aussi rapide que possible sous charge importante.

Le dispositif de liaison selon l'invention comporte une bague annulaire 7, de surface extérieure cylindrique, mais qui pourrait être légèrement conique, et qui, dans l'exemple illustré, est constituée par assemblage de trois segments égaux complémentaires 7a, 7b, 7c.

Sur la bague 7, dans laquelle est engagée, ici par vissage, l'extrémité d'une tige filetée 2, est engagé avec frettage à chaud un manchon désigné globalement par 6. Ce manchon 6 comporte une partie inférieure présentant une portée intérieure 13 appliquée sur la périphérie de la bague 7, et une partie d'extrémité supérieure libre 10 présentant par exemple une section extérieure filetée 9 et sur laquelle peut s'engager un écrou 8 (figure 1) retenant le manchon 6 sur un élément de structure à séparer de l'élément de structure auquel est fixée la tige filetée 4.

Dans l'exemple illustré avec une tige filetée et un écrou, il est prévu un pion cylindrique 14 logé dans des rainures de section semi-circulaire 15 et 16 de la paroi intérieure 13 du manchon et de la paroi extérieure du segment 7c de l'écrou. Ce pion cylindrique est destiné à favoriser la transmission d'un couple de serrage après frettage du manchon par application d'un outil tel qu'une clé sur l'écrou.

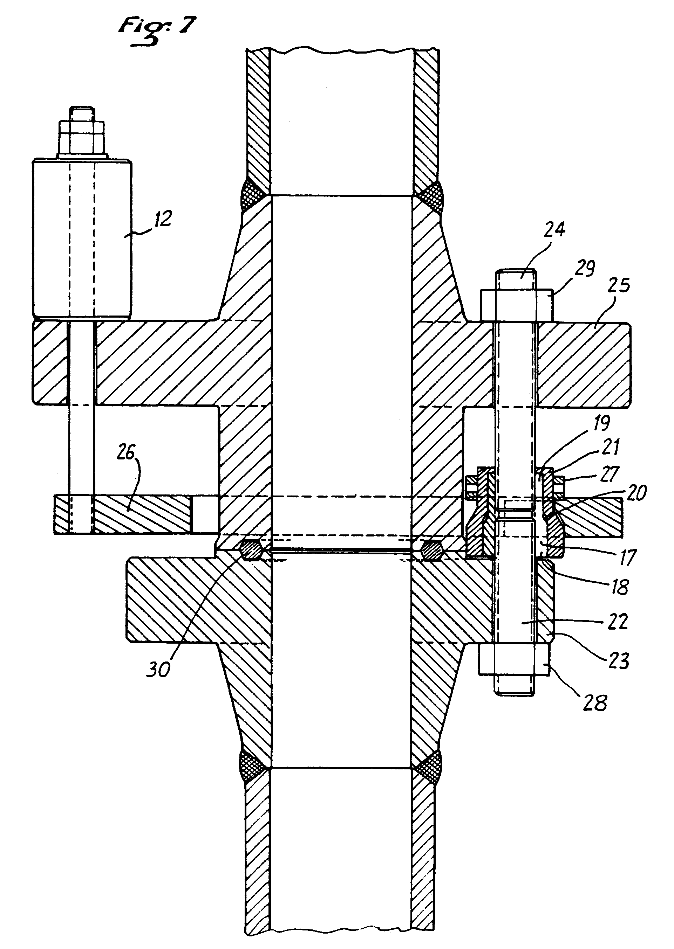

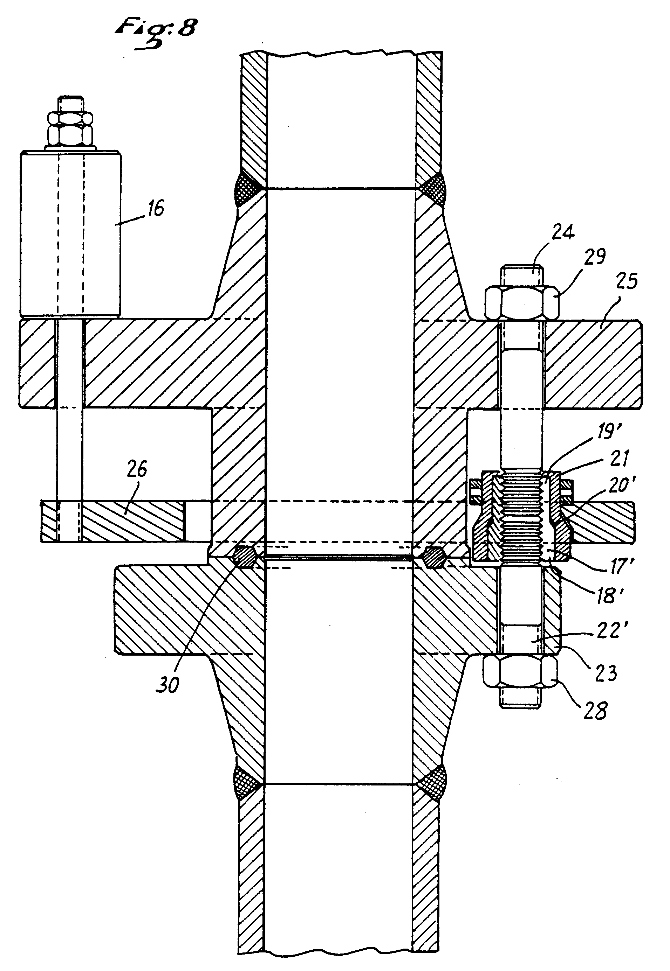

Lorsque, comme illustré sur la figure 3, on exerce une traction dans le sens matérialisé par la flèche T, on réalise un défrettage et un déplacement du manchon 6 par rapport à l'écrou 7 qui reste solidaire de la tige filetée 4. Lorsqu'est atteinte la position illustrée à la figure 3, les segments de l'écrou 7 ne sont plus retenus à l'intérieur de l'évidement du manchon 6, ce qui provoque leur séparation comme schématisé par la flèche S sur la figure 4 et une séparation de l'écrou 7 d'avec la tige 4 qui, n'étant plus retenue, s'écarte dans le sens de la flèche R illustrée sur la figure 4.

Le connecteur illustré sur la figure 7 diffère de celui illustré à la figure 6 notamment par le fait que chacune des bagues 17 des dispositifs de liaison présente une surface extérieure étagée avec une partie inférieure de plus grand diamètre extérieur 18 et une partie supérieure de diamètre extérieur réduit 19, un décrochement 20 étant ainsi réalisé entre les deux parties. Le manchon fretté 21 présente une forme de section intérieure adaptée à celle de la bague 17.

Une tige profilée, ici filetée, 22 solidaire d'une bride 23 est vissée dans la bague, ici un écrou 17, sur une partie de sa longueur, sensiblement jusqu'à la zone de décrochement 20, tandis qu'une tige profilée, ici filetée, supérieure 24 solidaire d'une bride 25 est vissée dans l'écrou 17 jusqu'à venir sensiblement en regard de l'extrémité de la tige 22. Dans cet exemple également, l'écrou 17 est réalisé en trois segments complémentaires. Le manchon 21 est solidarisé d'un plaque annulaire 26 par un écrou 27 analogue à l'écrou 13 du mode de réalisation précédent. De même, des écrous 28 et 29 solidarisent les tiges filetées 22 et 24 des brides 23 et 25. Comme dans le mode de réalisation de la figure 1, il est prévu un joint d'étanchéité 30 entre les deux éléments de connecteur.

On comprend qu'en rapprochant sous l'effet du vérin 12, la plaque 26 de la bride 25, le manchon 21 soulevé par l'écrou 27 coulisse par rapport à l'écrou 17 jusqu'à ce que son extrémité inférieure vienne dans la zone de décrochement de la surface extérieure de l'écrou provoquant une séparation des segments constitutifs de l'écrou.

Cette réalisation permet une déconnexion rapide sous charge élevée dans le cas où la charge est fortement déviée par rapport à l'axe longitudinal de la connexion.

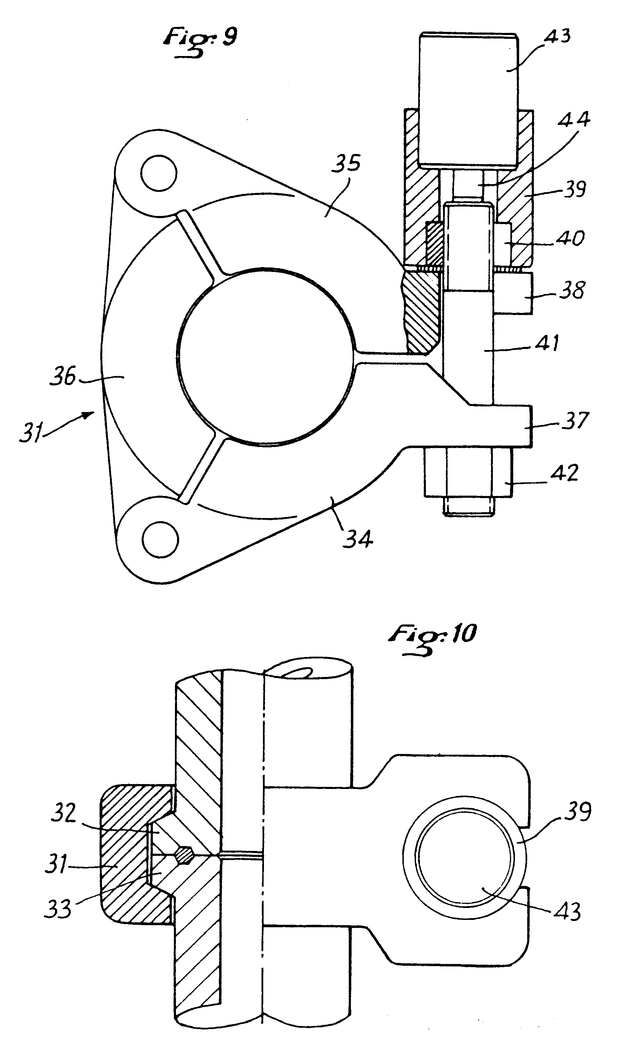

Le mode le réalisation de la figure 8 diffère de celui de la figure 7 par le fait que chaque tige profilée 22ʹ et 24ʹ comporte non plus un filetage mais une dentelure, la bague 17ʹ présentant un profilage interne dentelé de manière correspondante. Les fonds et les sommets des dents sont situés dans des plans parallèles orthogonaux à l'axe de la bague et des tiges.

Un tel profilage sous forme de dentelure peut naturellement être mis en oeuvre pour la tige 4 et la bague 7 du mode de réalisation de la figure 1.

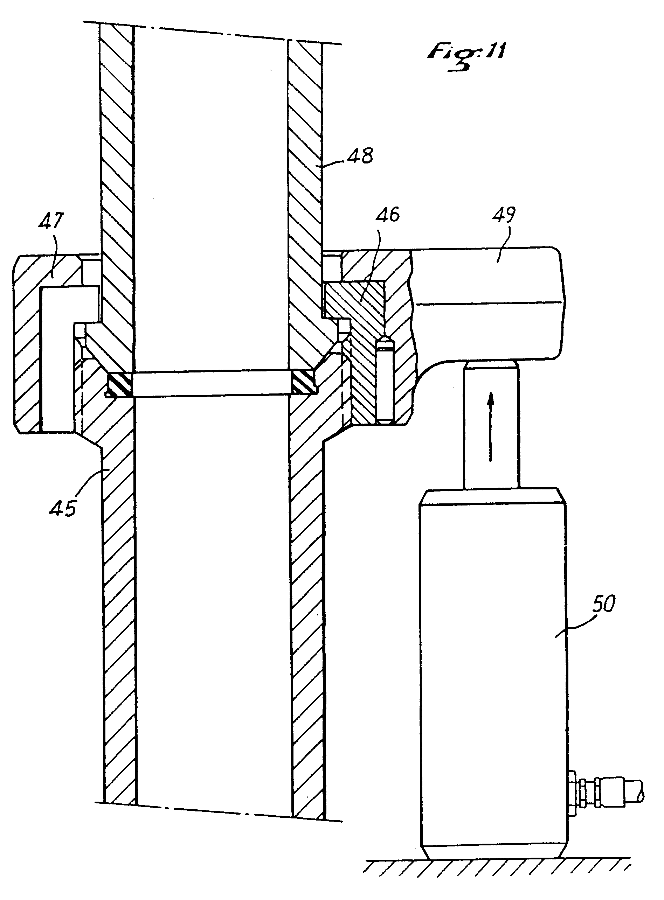

Dans le mode de réalisation des figures 9 et 10, il est prévu un organe annulaire en forme d'étrier 31 reliant deux brides 32, 33 en regard des éléments de connecteur assemblés. Dans l'exemple illustré, l'étrier comporte deux parties 34, 35 articulées par rapport à une partie 36 un dispositif de liaison à séparation rapide selon l'invention étant disposé entre deux flasques en regard 37, 38, des parties 34, 35. On retrouve ainsi un manchon 39 engagé sur un écrou 40 par exemple à trois segments à l'intérieur duquel est vissée une tige filetée 41 solidaire par un écrou 42 du flasque 37. La séparation des flasques 37, 38 et donc l'ouverture de l'étrier 31 et la séparation des brides 32, 33 du connecteur est assurée par un vérin 43 solidaire du manchon 39 et dont la tige 44 vient en appui sur la tige filetée 41.

Dans le mode de réalisation de la figure 11, il est prévu un seul dispositif de liaison dont la tige filetée 45, tubulaire, est l'une des conduites raccordées, un écrou 46 entouré par un manchon 47, étant disposé autour de la tige 45 et l'autre conduite 48.

Le manchon 47 comporte un flasque 49 sur lequel prend appui en vue de la déconnexion la tige d'un vérin 50.

Selon l'invention, on peut réaliser des connecteurs particulièrement simples et fiables, séparables sous l'effet d'une force très sensiblement inférieure à la charge matérialisée par la tension de tiges correspondantes, par exemple 15 à 20 fois plus faible que cette tension.

Ainsi, par exemple, avec une tige filetée 2 ou 22 de dimension M30 avec un couple de serrage d'écrou de 130 m.daN correspondant à une tension de tige de 29 tonnes, un effort axial de 1,7 tonne suffit à réaliser la déconnexion.

## Revendications

1. Connecteur à déverrouillage rapide sous charge de conduites de transport de fluides tels que des hydrocarbures, caractérisé par le fait qu'il comprend, entre deux brides annulaires des conduites en regard (1,2;23,25),
- une pluralité de dispositifs de liaison agencés circonférentiellement, chaque dispositif de liaison comprenant une bague annulaire profilée intérieurement (7,17,17') constituée d'au moins deux segments(7a,7b,7c) de forme complémentaire, une tige (4,22,22') solidarisée de l'une desdites brides (1;23), munie d'un profilage extérieur correspondant au profilage intérieur de la bague, engagée intérieurement dans ladite bague et s'étendant sur au moins une partie de la hauteur de celle-ci, et un manchon annulaire (6,21) engagé sur ladite bague,
- et au moins un organe d'actionnement, tel qu'un vérin (12), prenant appui sur la bride annulaire de l'une des deux conduites et relié aux manchons solidarisés entre eux pendant leur déplacement pour déplacer axialement ceux-ci par rapport aux bagues correspondantes, et provoquer la séparation des conduites.

2. Connecteur selon la revendication 1, caractérisé par le fait que l'organe d'actionnement (12) est relié aux manchons (6,21) par une plaque annulaire (11,26) dont sont solidarisés lesdits manchons.

3. Connecteur selon la revendication 1 ou 2, caractérisé par le fait que les profilages sur la tige et la bague sont des filetages, la bague (7, 17) étant un écrou dans lequel est vissée la tige filetée (4,22).

4. Connecteur selon la revendication 3, caractérisé par le fait qu'il est prévu sur la paroi intérieure (13) du manchon (6) et la paroi extérieure de l'un au moins des segments (7c) de l'écrou, au moins une rainure de section semi-circulaire (15,16), un pion cylindrique (14) étant logé dans les rainures en regard pour permettre la transmission d'un couple de serrage.

5. Connecteur selon la revendication 1 ou 2, caractérisé par le fait que les profilages sur la tige (22') et la bague (17') sont des dentelures.

6. Connecteur selon l'une quelconque des revendications précédentes, caractérisé par le fait que le manchon annulaire (6,21) est fretté à chaud sur la bague annulaire (7,17,17').

7. Connecteur selon l'une quelconque des revendications précédentes, caractérisé par le fait que la surface de contact entre la bague (7,17,17') et le manchon (6,21) est cylindrique.

8. Connecteur selon l'une quelconque des revendications précédentes, caractérisé par le fait que la bague (17,17') présente une section extérieure étagée (18,19 ; 18',19') comportant au moins un décrochement (20,20'), le manchon (21) présentant une section interne correspondante.

9. Connecteur selon l'une quelconque des revendications précédentes, caractérisé par le fait que chaque dispositif de liaison comporte en outre une seconde tige profilée (24,24') engagée dans la bague (17,17').

10. Connecteur à déverrouillage rapide sous charge de conduites de transport de fluides tels que des hydrocarbures, caractérisé par le fait qu'il comprend, entre deux flasques d'extrémité (37,38) d'un organe (31) en forme d'étrier reliant deux brides annulaires des conduites en regard (32,33), un dispositif de liaison comprenant une bague annulaire profilée intérieurement (40) constituée d'au moins deux segments de forme complémentaire, une tige profilée (41) reliant les deux flasques d'extrémité (37,38) entre eux, ladite tige étant munie d'un profilage extérieur correspondant au profilage intérieur de la bague, engagée intérieurement dans ladite bague et s'étendant sur au moins une partie de la hauteur de celle-ci et un manchon annulaire (39) engagé sur ladite bague et apte à être déplacé axialement par rapport à celle-ci sous l'effet d'un organe d'actionnement, tel qu'un vérin (12) prenant appui sur l'un des flasques d'extrémité de l'organe en forme d'étrier, et agissant directement ou indirectement sur ledit manchon pour déplacer axialement celui-ci par rapport à la bague et provoquer la séparation des conduites.

11. Connecteur à déverrouillage rapide sous charge de conduites de transport de fluides tels que des hydrocarbures, caractérisé par le fait qu'il comprend, entre les conduites (45,48) un dispositif de liaison comprenant une bague annulaire profilée intérieurement (46) constituée d'au moins deux segments(7a,7b,7c) de forme complémentaire, l'une des conduites (45) étant munie d'un profilage extérieur correspondant au profilage intérieur de la bague, ladite bague étant engagée autour de la partie profilée de ladite conduite (45) et venant en appui sur la bride d'extrémité de l'autre conduite (48), et un manchon annulaire (47) engagé sur ladite bague et apte à être déplacé axialement par rapport à celle-ci sous l'effet d'un organe d'actionnement, tel qu'un vérin (50), disposé sur ou au voisinage d'une des conduites, agissant directement ou indirectement sur ledit manchon pour déplacer axialement celui-ci par rapport à la bague et provoquer la séparation des conduites.

## Claims

1. Connector with quick release under load for pipes for transporting fluids, such as hydrocarbons, characterized in that it comprises, between two annular flanges of the opposed pipes (1, 2; 23, 25),
- a plurality of joining devices arranged circumferentially, each joining device comprising an internally shaped annular ring (7, 17, 17') consisting of at least two segments (7a, 7b, 7c) of complementary shape, a rod (4, 22, 22') secured to one of the said flanges (1; 23), provided with an outer shaping corresponding to the inner shaping of the ring, engaged internally in the said ring and extending over at least part of the height of the latter, and an annular sleeve (6, 21) engaged over the said ring,
- and at least one actuating member, such as a cylinder (12), bearing on the annular flange of one of the two pipes and joined to the sleeves which are secured to one another during their displacement to displace the latter axially with respect to the corresponding rings, and to bring about the separation of the pipes.

2. Connector according to Claim 1, characterized in that the actuating member (12) is joined to the sleeves (6, 21) by an annular plate (11, 26) to which the said sleeves are secured.

3. Connector according to Claim 1 or 2, characterized in that the shapings on the rod and the ring are threads, the ring (7, 17) being a nut into which the threaded rod (4, 22) is screwed.

4. Connector according to Claim 3, characterized in that there is provided, on the inner wall (13) of the sleeve (6) and on the outer wall of at least one of the segments (7c) of the nut, at least one groove (15, 16) of semi-circular cross-section, a cylindrical peg (14) being held in the opposed grooves to allow the transmission of a tightening torque.

5. Connector according to Claim 1 or 2, characterized in that the shapings on the rod (22') and the ring (17') are serrations.

6. Connector according to any one of the preceding claims, characterized in that the annular sleeve (6, 21) is hot shrink-fitted onto the annular ring (7, 17, 17').

7. Connector according to any one of the preceding claims, characterized in that the contact surface between the ring (7, 17, 17') and the sleeve (6, 21) is cylindrical.

8. Connector according to any one of the preceding claims, characterized in that the ring (17, 17') has a stepped outer cross-section (18, 19; 18', 19') including at least one discontinuity (20, 20'), the sleeve (21) having a corresponding internal cross-section.

9. Connector according to any one of the preceding claims, characterized in that each joining device furthermore includes a second shaped rod (24, 24') engaged in the ring (17, 17').

10. Connector with quick release under load for pipes for transporting fluids such as hydrocarbons, characterized in that it comprises, between the two end cheeks (37, 38) of a stirrup-shaped member (31) joining two annular flanges of the opposed pipes (32, 33), a joining device comprising an internally shaped annular ring (40) consisting of at least two segments of complementary shape, a shaped rod (41) joining the two end cheeks (37, 38) together, the said rod being provided with an outer shaping corresponding to the inner shaping of the ring, engaged internally in the said ring and extending over at least part of the height of the latter, and an annular sleeve (39) engaged over the said ring and capable of being displaced axially with respect to the latter under the effect of an actuating member, such as a cylinder (12) bearing on one of the end flanges of the stirrup-shaped member, and acting directly or indirectly on the said sleeve to displace the latter axially with respect to the ring and to bring about the separation of the pipes.

11. Connector with quick release under load for pipes for transporting fluids such as hydrocarbons, characterized in that it comprises, between the pipes (45, 48) a joining device comprising an internally shaped annular ring (46) consisting of at least two segments (7a, 7b, 7c) of complementary shape, one of the pipes (45) being provided with an outer shaping corresponding to the inner shaping of the ring, the said ring being engaged around the shaped part of the said pipe (45) and coming to bear on the end flange of the other pipe (48), and an annular sleeve (47) engaged over the said ring and capable of being displaced axially with respect to the latter under the effect of an actuating member, such as a cylinder (50) located on or close to one of the pipes, acting directly or indirectly on the said sleeve to displace the latter axially with respect to the ring and to bring about the separation of the pipes.

## Patentansprüche

1. Unter Last schnell lösbare Verbindungsvorrichtung für Transportleitungen von Fluiden wie beispielsweise Kohlenwasserstoffen, dadurch gekennzeichnet, daß sie zwischen zwei gegenüberliegenden ringförmigen Flanschen (1, 2; 23, 25) der Leitungen umfaßt:
eine Vielzahl von in Umfangsrichtung angeordneten Verbindungseinrichtungen, die jeweils einen innen mit einem Profil versehenen Ring (7, 17, 17') aufweisen, der aus mindestens zwei Segmenten (7a, 7b, 7c) komplementärer Form besteht, wobei mit einem der Flansche (1; 23) eine Stange (4, 22, 22') verbunden ist, die mit einem dem Innenprofil des Rings entsprechenden Außenprofil versehen ist, innen in den Ring eingreift und sich über wenigstens einen Teil von dessen Höhe erstreckt, und wobei über den Ring eine ringförmige Hülse (6, 21) greift,
und wenigstens ein Betätigungselement, wie beispielsweise ein Hubelement (12), das an einem ringförmigen Flansch einer der zwei Leitungen aufliegt und an den untereinander verbundenen Hülsen zu deren Verschiebung befestigt ist, um diese in Bezug auf die entsprechenden Ringe axial zu verschieben und die Trennung der Leitungen hervorzurufen.

2. Verbindungsvorrichtung nach Anspruch 1, dadurch gekennzeichnet, daß das Betätigungselement (12) mit den Hülsen (6, 21) über eine ringförmige Platte (11, 26) verbunden und an den Hülsen befestigt ist.

3. Verbindungsvorrichtung nach Anspruch 1 oder 2, dadurch gekennzeichnet, daß die Profile auf der Stange und dem Ring Gewinde sind, wobei der Ring (7, 17) eine Mutter darstellt, in die die Gewindestange (4, 22) eingeschraubt ist.

4. Verbindungsvorrichtung nach Anspruch 3, dadurch gekennzeichnet, daß auf der Innenwand (13) der Hülse (6) und der Außenwand mindestens eines der Segmente (7c) der Schraube mindestens eine Rille (15, 16) halbkreisförmigen Querschnitts vorgesehen ist, wobei in den gegenüberliegenden Rillen ein zylindrischer Stift (14) angeordnet ist, um ein Anziehdrehmoment zu übertragen.

5. Verbindungsvorrichtung nach Anspruch 1 oder 2, dadurch gekennzeichnet, daß die Profile auf der Stange (22') und dem Ring (17') Sägezahnprofile sind.

6. Verbindungsvorrichtung nach einem der vorhergehenden Ansprüche, dadurch gekennzeichnet, daß die ringförmige Hülse auf den Ring (7, 17, 17') warm aufgezogen wird.

7. Verbindungsvorrichtung nach einem der vorhergehenden Ansprüche, dadurch gekennzeichnet, daß die Kontaktfläche zwischen dem Ring (7, 17, 17') und der Hülse (6, 21) zylindrisch ist.

8. Verbindungsvorrichtung nach einem der vorhergehenden Ansprüche, dadurch gekennzeichnet, daß der Ring (17, 17') einen abgestuften äußeren Querschnitt (18, 19; 18', 19') aufweist, der mindestens einen Absatz trägt, wobei die Hülse (21) mit einem entsprechenden Innenquerschnitt versehen ist.

9. Verbindungsvorrichtung nach einem der vorhergehenden Ansprüche, dadurch gekennzeichnet, daß jede Verbindungseinrichtung weiterhin eine zweite Profilstange (24, 24') aufweist, die in den Ring (17, 17') eingreift.

10. Unter Last schnell lösbare Verbindungsvorrichtung für Transportleitungen von Fluiden wie beispielsweise Kohlenwasserstoffen, gekennzeichnet durch
zwei ringförmige Flansche (32, 33) an den gegenüberliegenden Leitungen, die zwischen zwei Endflanschen (37, 38) eines Elements (31) der Form einer Verbindungsschelle angeordnet sind,
einer Verbindungseinrichtung, die einen mit einem Innenprofil versehenen Ring (40) aus mindestens zwei komplementär geformten Segmenten umfaßt,
eine die zwei Endflansche (37, 38) untereinander verbindende Profilstange (41), die mit einem dem Innenprofil des Rings entsprechenden Außenprofil versehen ist, innen in den genannten Ring eingreift und sich über mindestens einen Teil von dessen Höhe erstreckt, und
eine ringförmige Hülse (39), die den genannten Ring übergreift und bezüglich des Rings mittels eines Betätigungselements wie beispielsweise eines Hubelements (12) axial verschiebbar ist, das auf einem der Endflansche des schellenförmigen Elements aufliegt und direkt oder indirekt auf die Hülse wirkt, um die Hülse bezüglich des Rings axial zu verschieben und die Trennung der Leitungen hervorzurufen.

11. Unter Last schnell lösbare Verbindungsvorrichtung für Transportleitungen von Fluiden wie beispielsweise Kohlenwasserstoffen, gekennzeichnet durch
eine Verbindungseinrichtung zwischen den Leitungen (45, 48), die einen mit einem Innenprofil versehenen Ring (46) aufweist, der aus mindestens zwei komplementär geformten Segmenten (7a, 7b, 7c) besteht, wobei eine der Leitungen (45) mit einem Außenprofil entsprechend dem Innenprofil des Rings versehen ist und der Ring den profilierten Bereich der Leitung (45) umgreift und an dem äußeren Stiel der anderen Leitung (48) gehalten ist, und
eine ringförmige Hülse (47), die den genannten Ring übergreift und mittels eines Betätigungselements, wie beispielsweise eines Hubelements (50), axial bezüglich des Rings verschiebbar ist, wobei das Betätigungselement auf oder in der Nähe einer der Leitungen angeordnet ist und direkt oder indirekt auf die genannte Hülse wirkt, um die Hülse axial bezüglich des Rings zu verschieben und die Trennung der Leitungen hervorzurufen.
